# EUROPÄISCHE PATENTSCHRIFT

(11) **EP 2 082 108 B1**
(45) Veröffentlichungstag und Bekanntmachung des Hinweises auf die Patenterteilung: **25.05.2016**
(21) Anmeldenummer: 07818304.3
(22) Anmeldetag: 20.09.2007
(51) Int. Cl.: E05F 3/04, F16F 9/32, C22C 37/00

(54) **HYDRAULIKARMATUR MIT GEHÄUSE AUS GUSSEISEN MIT VERMICULARGRAPHIT**
HYDRAULIC FITTING WITH HOUSING MADE OF CAST IRON CONTAINING VERMICULAR GRAPHITE
ROBINETTERIE HYDRAULIQUE AVEC BOÎTIER EN FONTE DE FER ET GRAPHITE VERMICULAIRE

(30) Priorität: 25.10.2006 DE 102006050145
(43) Veröffentlichungstag der Anmeldung: 29.07.2009
(73) Patentinhaber: DORMA Deutschland GmbH, 58256 Ennepetal (DE)
(72) Erfinder: STREIT, Hans-Georg, 33619 Bielefeld (DE)
(74) Vertreter: Balder IP Law, S.L.
(86) Internationale Anmeldenummer: PCT/EP2007/008214
(87) Internationale Veröffentlichungsnummer: WO 2008/049492

(56) Entgegenhaltungen:
- EP-A1- 0 872 567
- DE-C2- 19 780 253
- JP-A- 2003 293 948
- US-A- 2 866 224
- US-A1- 2005 217 764

## Beschreibung

Die Erfindung betrifft eine Hydraulikarmatur für den Einbau in ortsfeste Hydraulikanlagen, mit einem Gehäuse aus Gußeisen, das eine mit einer Hydraulikflüssigkeit gefüllte Kammer bildet, die bewegliche Einbauten aufnimmt, die zumindest zeitweise mit der Innenwand der Kammer in Reibberührung stehen.

Insbesondere befaßt sich die Erfindung mit hydraulischen Türschließern für Türen aller Art und Bauweise, einschließlich Brandschutztüren und dergleichen. Zumindest ein Teil des aus Gußeisen hergestellten Gehäuses eines solchen Türschließers bildet einen Zylinder, der als bewegliche Einbauten einen Hydraulikkolben sowie eine zugehörige Schraubendruckfeder aufnimmt. Der von der Schraubendruckfeder aufgenommene Teil des Zylinders ist ständig mit Hydraulikflüssigkeit gefüllt. Da diese Feder durch die Innenwand des Zylinders geführt wird, kommt es bei den Stellbewegungen des Türschließers zu Reibung zwischen der Feder und der Wand des Gehäuses. Dies hat den Nachteil, daß es an den miteinander in Reibberührung stehenden Teilen zu einem beträchtlichen Abrieb und damit zum Eintrag von Verunreinigungen in die Hydraulikflüssigkeit kommt. Mit zunehmender Verschmutzung des Hydrauliköls steigt die Gefahr, daß der Türschließer blockiert. Eine einwandfreie und sichere Funktion des Türschließers kann deshalb bisher nur für eine begrenzte Standzeit gewährleistet werden. Danach muß der Türschließer ausgetauscht oder das Hydrauliköl abgelassen und ersetzt werden, so daß hohe Wartungskosten entstehen.

Aufgabe der Erfindung ist es eine Hydraulikarmatur zu schaffen, die eine längere Standzeit der Hydraulikflüssigkeit erlaubt.

Diese Aufgabe wird erfindungsgemäß dadurch gelöst, daß das Gußeisen des Gehäuses Vermiculargraphit enthält.

Bei Gußeisen unterscheidet man allgemein zwischen verschiedenen Materialtypen, die als GJL, GJV und GJS bezeichnet werden und die sich hinsichtlich der Konfiguration der Graphiteinlagerungen in dem Gußeisen unterscheiden. Bei Grauguß (GJL), der bisher für die Gehäuse von Hydraulikarmaturen der oben genannten Art eingesetzt wird, liegt der Graphit vornehmlich in der Form von Lamellen vor (Lamellengraphit). Bei Sphäroguß (GJS) liegt das Graphit in der Form von im wesentlich sphärolitischen Partikeln vor (Kugelgraphit). GJV ist eine Zwischenform, bei der die Grahpitpartikel die Gestalt von "Würmchen" haben. Diese Graphitform wird als Vermiculargraphit bezeichnet.
Die unterschiedlichen Graphitformen lassen sich durch entsprechende Analysen und Behandlung der Schmelze durch geeignete metallurgische Maßnahmen erreichen.

Die Duktilität und Festigkeit des Materials nimmt generell von GJL über GJV zu GJS zu. Da sich GJV und erst recht GJS jedoch wesentlich schwerer bearbeiten lassen und verfahrensbedingt erheblich teurer sind, werden diese Materialien generell nur dort eingesetzt, wo durch den Anwendungfall besondere Anforderungen an die Materialeigenschaften gestellt werden.
Das Material GJV wird beispielsweise beschrieben in Nechtelberger, E. und B. Lux: Gefügeaufbau und Eigenschaften von Gußeisen mit Vermiculargraphit, Gießerei-Praxis (1984) H.11, S.177-187. Nähere Spezifikationen finden sich im VDG-Merkblatt "Gußeisen mit Vermiculargraphit" W50, März 2002, zu beziehen durch das VDG-Informationszentrum Gießerei, Düsseldorf. In der Praxis wird GJV bisher in der Automobilindustrie eingesetzt, wo es darum geht, Bauteile mit einem möglichst geringen Gewicht zu schaffen, die dennoch die jeweiligen Festigkeitsanforderungen erfüllen. Einschlägige Publikationen hierzu sind: EP 0 872 567 A1, Renfang et al. "Gußeisen mit Vermiculargraphit für Abgaskrümmer und Getriebegehäuse, konstruieren + gießen 20 (1995) Nr. 2, Seiten 9 bis 14; Koppka "Bearbeitbarkeit von Gußeisen mit Vermiculargraphit", Gießerei 91 03/2004, Seiten 32-35 und Denkena et al.: Neue Erkenntnisse zum Spanen von Gußteilen aus Gußeisen mit Vermiculargraphit" konstruieren + gießen 28 (2003) Nr. 4, Seiten 9 bis 24. In der letztgenannten Druckschrift werden die folgenden Einsatzgebiete erwähnt: Motorblock, Zylinderkopf, Getriebegehäuse, Schwungrad, Bremsscheibe, Pumpengehäuse (z.B. für Kühlwasserpumpen) und Abgaskrümmer.

Aus US2005/0217764 A1 ist die Verwendung von Gusseisen mit 3-15% Vermiculargraphit für reibungsbehaftete Bauteile einer Pumpe bekannt.

Bei Türschließern und vergleichbaren Hydraulikarmaturen bestehen diese Anforderungen im allgemeinen nicht, weshalb die Gehäuse solcher Hydraulikarmaturen bisher nur aus GJL (Grauguß mit Lamellengraphit) hergestellt werden, insbesondere aus einem weichen Graugußwerkstoff gemäß DIN EN 1561.

Es hat sich jedoch gezeigt, daß die Verwendung von GJV für solche Hydraulikgehäuse spezielle Vorteile bietet, die den Nachteil der schwereren Bearbeitung mehr als wettmachen und die bisher im Stand der Technik nicht in Betracht gezogen worden sind. In Versuchen konnte bestätigt werden, daß der Eintrag von Verunreinigungen in die Hydraulikflüssigkeit bei Gehäusen mit Vermiculargraphit erheblich herabgesetzt ist. Auf diese Weise läßt sich der Prozeß der Verunreinigung der Hydraulikflüssigkeit, insbesondere mit Graphit aus dem Gußeisen, beträchtlich verzögern, so daß eine hohe Betriebssicherheit der Hydraulikarmaturen bei wesentlich verlängerten Standzeiten und Wartungsintervallen erreicht werden kann. Dieser Effekt ist darauf zurückzuführen, daß der Vermiculargraphit aufgrund seiner speziellen Partikelform den Einbauten, die an der Innenfläche des Gußgehäuses reiben, wesentlich geringere Angriffsflächen bietet, so daß sich Graphitpartikel nicht so leicht aus der Metallmatrix herauslösen lassen und in die Hydraulikflüssigkeit übergehen. Die Verwendung von GJV für die Gehäuse von Hydraulikarmaturen ist deshalb unabhängig von Überlegungen, die sich auf die Festigkeit im Verhältnis zur Wanddicke und/oder dem Gewicht des Gehäuses beziehen, generell immer dann von Vorteil, wenn die Gefahr einer Funktionsbeeinträchtigung durch den Eintrag von Abrieb in die Hydraulikflüssigkeit besteht.

Vorzugsweise sollte der Anteil an Vermiculargraphit am Gesamt-Graphitgehalt mehr als 30%, vorzugsweise mehr als 70% betragen.

Im folgenden wird ein Ausführungsbeispiel anhand der Zeichnung näher erläutert.

Es zeigen:
- Fig. 1: eine perspektivische Ansicht eines Türschließergehäuses;
- Fig. 2: eine rasterelektronenmikroskopische Aufnahme von Gußeisen mit Vermiculargraphit (GJV); und
- Figuren 3 und 4: rasterelektronenmikroskopische Aufnahmen von Gußeisen mit Lamellengraphit (GJL) bzw. Kugelgraphit (GJS).

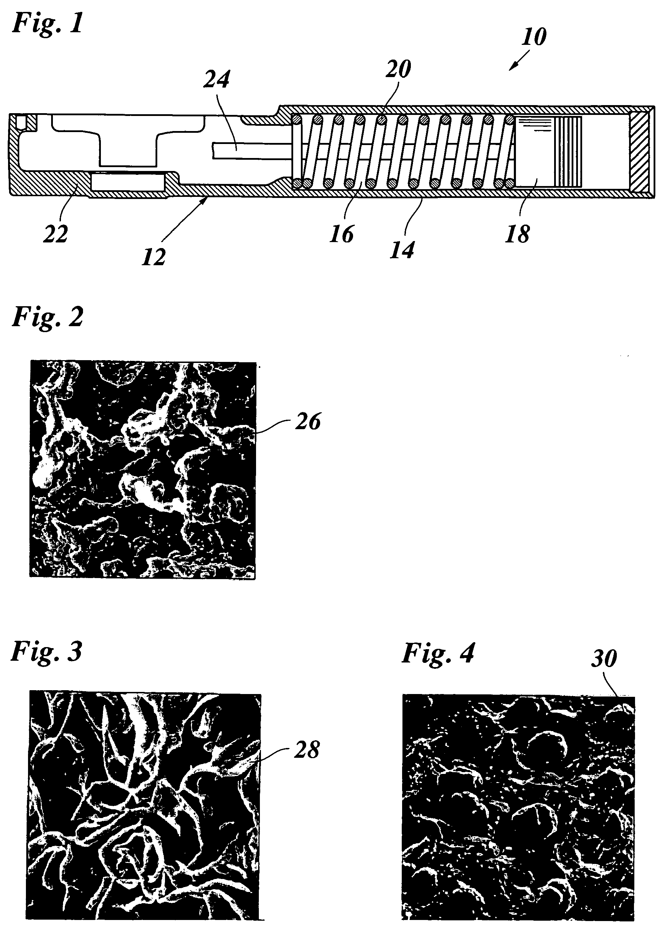

In Figur 1 sind in einem schematischen Schnitt die wesentlichen Teile eines hydraulischen Türschließers 10 gezeigt, der ein Gehäuse 12 aus Gußeisen mit Vermiculargraphit (GJV) aufweist. Das Gehäuse 12 bildet einen Zylinder 14, der eine an einem Ende geschlossene und mit einer Hydraulikflüssigkeit gefüllte Kammer 16 begrenzt. Diese Kammer 16 nimmt einen Kolben 18 auf und gibt zugleich eine Schraubendruckfeder 20 Führung, die sich mit einem Ende an dem Kolben 18 und mit dem entgegengesetzten Ende an einem inneren Absatz des Gehäuses 12 abstützt.

Der Zylinder 14 mündet an einem Ende in einen erweiterten Teil 22 des Gehäuses, der einen hier nicht näher gezeigten Gelenkmechanismus aufnimmt, der durch eine mit dem Kolben 18 verbundene Kolbenstange 24 betätigt wird, wobei eine Gehäuseöffnung sich sowohl seitlich als auch stirnseitig befinden kann.

Bei den durch den Türschließer 10 gesteuerten Öffnungs- uns Schließbewegungen einer Tür bewegt sich der Kolben 18 axial in dem Zylinder 14, wobei die Schraubendruckfeder 20 abwechselnd komprimiert und entspannt wird. Da diese Schraubendruckfeder 20 durch die Innenwände des Zylinders 14 Führung erhält, kommt es zu Reibung zwischen den Wendeln der Feder und der aus Gußeisen bestehenden Wand des Zylinders 14. Da der Graphit in dieser Wand des Zylinders 14 jedoch im wesentlichen als Vermiculargraphit auftritt, ist der Abrieb und damit der Eintrag von Graphitpartikeln in die in der Kammer 16 enthaltene Hydraulikflüssigkeit erheblich herabgesetzt. So wird bei langer Standzeit des Türschließers eine hohe Betriebssicherheit erreicht, und die Intervalle, in denen die Hydraulikflüssigkeit auf ihren Verunreinigungsgrad geprüft und gegebenenfalls gewechselt werden muß, können erheblich vergrößert werden. Insgesamt wird so über die gesamte Nutzungsdauer des Türschließers 10 gegenüber Türschließern mit einem herkömmlichen Gehäuse aus Grauguß (GJL) eine deutliche Kostenreduzierung erreicht.

Figur 2 ist eine rasterelektronenmikroskopische Aufnahme des Materials (GJV), aus dem das Gehäuse 12 gemäß Figur 1 hergestellt ist, und läßt die "würmchenförmige" Gestalt der Graphitpartikel 26 erkennen. Zum Vergleich zeigt Figur 3 Graphitpartikel in der Form von Lamellen 28, wie sie für Grauguß (GJL) typisch sind, und Figur 4 zeigt die für Sphäroguß (GJS) typischen Graphitpartikel 30 mit kugeliger Gestalt.

## Patentansprüche

1. Hydraulikarmatur für den Einbau in ortsfeste Hydraulikanlagen, mit einem Gehäuse (12) aus Gußeisen, das eine mit einer Hydraulikflüssikeit gefüllte Kammer (16) bildet die bewegliche Einbauten (18, 20) aufnimmt, die zumindest zeitweise mit der Innenwand der Kammer (16) in Reibberühung stehen, **dadurch gekennzeichnet, daß** das Gußeisen Vermiculargraphit enthält.

2. Hydraulikarmatur nach Anspruch 1, **dadurch gekennzeichnet, daß** der Anteil von Vermiculargraphit am Gesamt-Graphitgehalt mehr als 30%, vorzugsweise mehr als 70% beträgt.

3. Hydraulikarmatur nach Anspruch 1 oder 2, in der Form eines hydraulischen Türschließers (10).

## Claims

1. A hydraulic fitting for the installation into stationary hydraulic systems, including a housing (12) made from cast iron, which forms a compartment (16), which is filled with hydraulic fluid and accommodates the displaceable assemblies (18, 20), which are at least temporarily in a frictional contact with the inside walling of the compartment (16), **characterized in that** the cast iron includes spheroid graphite.

2. The hydraulic fitting according to claim 1, **characterized in that** the proportion of spheroid graphite to the overall graphite content amounts to more than 30 %, preferably more than 70 %.

3. The hydraulic fitting according to claim 1 or 2, in the shape of a hydraulic door closer (10).

## Revendications

1. Robinetterie hydraulique pour le montage dans des installations hydrauliques, avec un boîtier (12) en fonte, lequel forme un compartiment (16) qui est rempli de fluide hydraulique et reçoit les équipements mobiles (18, 20), lesquels sont au moins temporellement en contact de friction avec la paroi intérieure du compartiment (16), **caractérisée en ce que** la fonte comporte du graphite vermiculaire.

2. Robinetterie hydraulique selon la revendication 1, **caractérisée en ce que** la part de graphite vermiculaire au taux total de graphite s'élève à plus de 30 % , de préférence à plus de 70 % .

3. Robinetterie hydraulique selon la revendication 1 ou 2 ayant la forme d'un ferme-porte hydraulique (10).
